(19) Europäisches Patentamt
European Patent Office
Office européen des brevets

(11) **EP 2 551 362 A1**

(12) **EUROPEAN PATENT APPLICATION**
published in accordance with Art. 153(4) EPC

(43) Date of publication:
**30.01.2013 Bulletin 2013/05**

(51) Int Cl.:
***C22B 1/243*** (2006.01)     ***C21B 13/10*** (2006.01)

(21) Application number: **11759543.9**

(22) Date of filing: **24.03.2011**

(86) International application number:
**PCT/JP2011/057254**

(87) International publication number:
**WO 2011/118738 (29.09.2011 Gazette 2011/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2010 JP 2010236743**
**25.03.2010 JP 2010070176**
**25.03.2010 JP 2010070175**

(71) Applicant: **Kabushiki Kaisha Kobe Seiko Sho Chuo-ku Kobe-shi Hyogo 651-8585 (JP)**

(72) Inventors:
• **HORIGUCHI, Motohiro Hyogo 651 - 2271 (JP)**
• **KUNII, Kazutaka Hyogo 651 - 2271 (JP)**

(74) Representative: **Müller-Boré & Partner Patentanwälte Grafinger Straße 2 81671 München (DE)**

(54) **CARBON-MATERIAL-CONTAINING IRON OXIDE BRIQUETTE COMPOSITION, METHOD FOR PRODUCING SAME, AND METHOD FOR PRODUCING REDUCED IRON USING SAME**

(57)     Disclosed is a carbon-material-containing iron oxide briquette composition that, when obtaining direct reduced iron by heating in a moving hearth reduction furnace, does not turn into powder in the furnace leading to an accumulation of powder, and reliably prevents the obtained direct reduced iron from turning into powder during conveyance, decreasing yield. Further disclosed are a method for producing same, and a method for producing direct reduced iron using same. The carbon-material-containing iron oxide briquette composition is characterized by: the solidus temperature that is of an Al2O3-CaO-SiO2 ternary system slag in said briquette composition and that is determined by the amount of contained Al2O3, CaO, and SiO2 being no greater than 1300 DEG C; and having an amount of combined carbon material such that the carbon remaining in the direct reduced iron produced by heat treating said briquette composition in the aforementioned moving hearth reduction furnace at a temperature above the aforementioned solidus temperature and below the liquidus temperature of the aforementioned ternary system slag being no more than 6 mass%.

FIG. 1

**Description**

Technical Field

The present invention relates to a carbon-material-containing iron oxide briquette composition used as a feedstock for a moving hearth reduction furnace for producing direct reduced iron, a method for producing the same, and a method for producing direct reduced iron using the same.

Background Art

The following technique is known: a technique for producing direct reduced iron in such a way that a carbon material which serves as a reduction agent and which contains coal and/or a carbon powder such as powder generated in the production of coke, water, and a binder are added to and mixed with iron ore and a powdery iron oxide-containing material such as dust containing a large amount of iron oxide generated in an ironmaking/steelmaking process; the mixture is formed into pellets or briquettes; and a compacted body (carbon-material-containing iron oxide briquette composition) thereof is dried and is then heated in a rotary hearth furnace such that a reduction reaction occurs. Since the compacted body is made of fine powder, the fine powder is generated from the unreduced compacted body. Even after reduction is finished, the compacted body contains carbonaceous matter unused for reduction. Therefore, carbon, particles of direct reduced iron, and oxide components contained in the iron oxide-containing material remain in the furnace in the form of dust in some cases because of breakage due to impact when direct reduced iron is discharged from the furnace. Furthermore, while the discharged direct reduced iron is being transported with a transfer system such as a belt conveyor, fine powder is caused by the friction between the direct reduced iron particles or by drop impact due to connections of conveyor belts.

By the way, it is difficult to control the formation of slag, which affects the aggregation of reduced metallic iron, only by varying the heating temperature or residence time in a rotary hearth furnace in the course of producing direct reduced iron, leading to the reduction in crushing strength of direct reduced iron. Therefore, when being discharged from the rotary hearth furnace, direct reduced iron is pulverized or crushed and it is difficult to discharge direct reduced iron from the rotary hearth furnace. Particles of the direct reduced iron incapable of being discharged and slag remain in the furnace and react with refractory in the hearth to cause damage. Portions of the direct reduced iron pulverized or crushed during discharge are suspended in a gas stream in the furnace and may possibly adhere to internal walls of the rotary hearth furnace and the wall of a waste gas duct. If the discharged direct reduced iron is pulverized or crushed into dust during transportation, then the dust needs to be used as a raw material again and a reduction in yield is caused in a step of melting the direct reduced iron in an electric furnace or a blast furnace into pig iron.

Therefore, the following technique is desired: a technique for suppressing or preventing the occurrence of pulverization in the course of reduction in a furnace or during discharge out of the furnace and transportation.

On the other hand, produced direct reduced iron is used as an iron source for blast furnaces, steel converters, electric furnaces, and the like and therefore is required to have high carbon content for the purpose of increasing the energy efficiency of a furnace. However, the higher the carbon content is, the lower the strength of direct reduced iron is, as well known.

Therefore, various measures to increase the strength of carbon-material-containing iron oxide briquette compositions and direct reduced iron are under investigation in order to solve the above problems.

For example, the following methods have been proposed: a method in which pulverization is suppressed in such a manner that the basicity ($CaO/SiO_2$) ratio is adjusted to 0.3 to 0.6 using a Ca-containing compound such as $CaCO_3$ as a raw material for adjusting the basicity of slag for the purpose of compacting direct reduced iron particles by the fusion and fixation of a slag component and thereby the crushing strength of direct reduced iron is increased and a method in which the basicity is adjusted to 1.4 to 1.6 and a briquette composition containing 10% to 20% carbon is heated at 1,250°C to 1,350°C (see Patent Literatures 1 and 2). However, since some of iron sources such as iron ore and dust contain $Al_2O_3$ or $MgO$ in addition to $CaO$ and $SiO_2$, the melting temperature of slag cannot be precisely controlled or the strength of direct reduced iron cannot be reliably increased by controlling the ($CaO/SiO_2$) ratio only.

In order to suppress the occurrence of pulverization during charge to a furnace, the following technique has been proposed: a technique in which the strength of a compacted body is increased in such a manner that the sum of the amounts of $Al_2O_3$ and $SiO_2$ in a powdery iron source is adjusted to 4% to 10% by mass of a briquette composition (see Patent Literature 3). However, the melting temperature of slag cannot be precisely controlled by limiting the sum of the amounts of $Al_2O_3$ and $SiO_2$ in the source only or pulverization cannot be prevented by increasing the crushing strength.

Furthermore, the following technique has been proposed: a technique in which the formula ($XCaO + Al_2O_3 + XMgO$) / $XSiO_2$ is determined from the abundance of $CaO$, $Al_2O_3$, $MgO$, and $SiO_2$ and adjustment is performed such that the value thereof accounts for 1 to 5 (see Patent Literature 4). However, this technique focuses on deposit components that can be readily scraped off when deposits attached to a hearth are removed. This technique cannot increase the strength of direct reduced iron or prevent pulverization.

The following methods have been proposed: a method in which the value calculated from the formula ($CaO$ +$Al_2O_3$) / $SiO_2$ is adjusted to 1.6 or more and a method in which a hydrate containing a calcium ion is added as a Ca-containing substance (see Patent Literature 5). However, this method takes three days to form the hydrate and therefore needs a yard for storing raw materials for three days or more.

The following method has been proposed: a method in which a $CaF_2$ component is added and the ($CaO/SiO_2$) ratio is adjusted to 0.3 to 1.0 (see Patent Literature 6). However, the disposal of slag containing $CaF_2$ has been recently regulated because the influence of $CaF_2$ on the environment is concerned; hence, the use of $CaF_2$ is limited in many cases.

The following method has also been proposed for the purpose of preventing pulverization due to bursting in a furnace: a method in which the ($CaO/SiO_2$) ratio is adjusted to 0.5 to 1.5, the sum of the amounts of water of crystallization and volatile matter is adjusted to 10.5% by mass or less, and the content of adsorbed water is adjusted to 1.0% or less (see Patent Literature 7). However, this method is not applicable to a raw material containing an oxide containing more than 10.5% by mass of water of crystallization. It takes a long time to reduce the content of water to 1% by mass or less.

The following method has also been proposed: a method in which ($CaO$ - $MgO$) /T.Fe is adjusted to 0.1 or less, ($CaO$ - $MgO$) / $SiO_2$ is adjusted to 2 or less, the size of an iron oxide material is adjusted to 50 $\mu$m or less, the ratio of carbon dioxide to carbon monoxide in a reduction zone is adjusted to 0.3 to 1, the degree of metallization of direct reduced iron is adjusted to 50% to 85%, and residual carbon in the direct reduced iron is adjusted to 2% by mass or less (see Patent Literature 8). However, in this method, an iron oxide material with a size of more than 50 microns needs a pulverization step, those having a larger particle size take a longer crushing time, and direct reduced iron containing a large amount of carbon cannot be obtained.

Citation List

Patent Literature

PTL 1: Japanese Unexamined Patent Application Publication No. 2004-169140
PTL 2: Japanese Unexamined Patent Application Publication No. 10-147806
PTL 3: Japanese Unexamined Patent Application Publication No. 11-12626
PTL 4: Japanese Unexamined Patent Application Publication No. 2006-283136
PTL 5: Japanese Unexamined Patent Application Publication No. 2007-197783
PTL 6: Japanese Unexamined Patent Application Publication No. 2008-56986
PTL 7: Japanese Unexamined Patent Application Publication No. 2009-35820
PTL 8: Japanese Unexamined Patent Application Publication No. 2009-84688

Summary of Invention

Technical Problem

The present invention has an object to provide a carbon-material-containing iron oxide briquette composition which is not pulverized in a moving hearth reduction furnace or does not cause the accumulation of powder when direct reduced iron is obtained by heat-treating the carbon-material-containing iron oxide briquette composition in the moving hearth reduction furnace and which can reliably prevent a reduction in yield due to the pulverization of the obtained direct reduced iron during transportation, an object to provide a method for producing the same, and an object to provide a method for producing direct reduced iron using the same.

Solution to Problem

The present invention includes embodiments below.

(1) A carbon-material-containing iron oxide briquette composition is used as a feedstock for moving hearth reduction furnaces for producing direct reduced iron. In the carbon-material-containing iron oxide briquette composition, the amount of a blended carbon material is such that the solidus temperature of an $Al_2O_3$-$CaO$-$SiO_2$ ternary slag that is determined from the content of $Al_2O_3$, $CaO$, and $SiO_2$ in the briquette composition is 1,300°C or lower and residual carbon in direct reduced iron produced by heat-treating the briquette composition in the moving hearth reduction furnace at a temperature which is higher than the solidus temperature thereof and which is lower than the liquidus temperature of the ternary slag accounts for 6% by mass or less.

(2) A method for producing a carbon-material-containing iron oxide briquette composition used as a feedstock for a moving hearth reduction furnace for producing direct reduced iron includes a step of adjusting the blending ratio of an iron oxide-containing material, a carbon material, and an auxiliary material such that the solidus temperature of an $Al_2O_3$-CaO-$SiO_2$ ternary slag that is determined from the content of $Al_2O_3$, CaO, and $SiO_2$ in the briquette composition is 1,300°C or lower and residual carbon in direct reduced iron by produced by heat-treating the briquette composition in the moving hearth reduction furnace at a temperature which is higher than the solidus temperature thereof and which is lower than the liquidus temperature of the ternary slag accounts for 6% or less.

(3) In the method for producing the carbon-material-containing iron oxide briquette composition specified in Item (2), the auxiliary material used is at least one of a calcium oxide-containing substance and a silicon dioxide-containing substance.

(4) A method for producing direct reduced iron by heat-treating the carbon-material-containing iron oxide briquette composition specified in Item (1) or a carbon-material-containing iron oxide briquette composition produced by the method specified in Item (2) or (3) in the moving hearth reduction furnace includes a step of adjusting the heat treatment temperature within a temperature range which is higher than the solidus temperature and which is lower than the liquidus temperature such that the carbon use efficiency $\eta_c$ defined by the following equation ranges from 0.08 to 0.12:

$$\text{Equation} \qquad \eta_c = NCO_2 \,/\, (NCO + NCO_2)$$

wherein NCO and $NCO_2$ are the total molar quantity of CO and the total molar quantity of $CO_2$, respectively, generated from the carbon-material-containing iron oxide briquette composition during the heat treatment.

(5) A carbon-material-containing iron oxide briquette composition used as a feedstock for moving hearth reduction furnaces for producing direct reduced iron contains a pre-melt slag in which the pre-melt slag solidus temperature $T_{S\cdot P}$ of an $Al_2O_3$-CaO-$SiO_2$ ternary slag that is determined from the content of $Al_2O_3$, CaO, and $SiO_2$ is 1,300°C or lower.

(6) In the carbon-material-containing iron oxide briquette composition specified in Item (5), the pre-melt slag solidus temperature $T_{S\cdot P}$ is 1,200°C or lower.

(7) In the carbon-material-containing iron oxide briquette composition specified in Item (5), the pre-melt slag is at least one of a blast furnace slag and a steelmaking slag.

(8) In the carbon-material-containing iron oxide briquette composition specified in Item (6), the pre-melt slag is at least one of a blast furnace slag and a steelmaking slag.

(9) A method for producing the carbon-material-containing iron oxide briquette composition specified in Item (5) or (7) includes a step of adjusting the blending ratio of the pre-melt slag such that the total-slag solidus temperature $T_{S\cdot S}$ of the $Al_2O_3$-CaO-$SiO_2$ ternary slag that is determined from the content of $Al_2O_3$, CaO, and $SiO_2$ in the briquette composition is 1,300°C or lower and the melt ratio of the $Al_2O_3$-CaO-$SiO_2$ ternary slag in direct reduced iron that is produced in such a manner that the briquette composition is heat-treated in the moving hearth reduction furnace at a heat treatment temperature which is higher than the total-slag solidus temperature $T_{S\cdot S}$ and which is lower than the total-slag liquidus temperature $T_{L\cdot S}$ of the $Al_2O_3$-CaO-$SiO_2$ ternary slag that is determined from the content of $Al_2O_3$, CaO, and $SiO_2$ in the briquette composition accounts for 1% to 20%.

The melt ratio of the $Al_2O_3$-CaO-$SiO_2$ ternary slag in the direct reduced iron is defined as the mass ratio of a portion of the $Al_2O_3$-CaO-$SiO_2$ ternary slag in the direct reduced iron to the direct reduced iron, the portion being converted into a liquid phase at the heat treatment temperature.

(10) A method for producing the carbon-material-containing iron oxide briquette composition specified in Item (6) or (8) includes a step of adjusting the blending ratio of the pre-melt slag such that the total-slag solidus temperature $T_{S\cdot S}$ of the $Al_2O_3$-CaO-$SiO_2$ ternary slag that is determined from the content of $Al_2O_3$, CaO, and $SiO_2$ in the briquette composition is 1,200°C or lower and the melt ratio of the $Al_2O_3$-CaO-$SiO_2$ ternary slag in direct reduced iron that is produced in such a manner that the briquette composition is heat-treated in the moving hearth reduction furnace at a heat treatment temperature which is higher than the total-slag solidus temperature $T_{S\cdot S}$ and which is lower than the total-slag liquidus temperature $T_{LS}$ of the $Al_2O_3$-CaO-$SiO_2$ ternary slag that is determined from the content of $Al_2O_3$, CaO, and $SiO_2$ in the briquette composition accounts for 1% to 20%.

The melt ratio of the $Al_2O_3$-CaO-$SiO_2$ ternary slag in the direct reduced iron is defined as the mass ratio of a portion of the $Al_2O_3$-CaO-$SiO_2$ ternary slag in the direct reduced iron to the direct reduced iron, the portion being converted into a liquid phase at the heat treatment temperature.

(11) A method for producing direct reduced iron by heat-treating the carbon-material-containing iron oxide briquette composition specified in any one of Items (5) to (8) or a carbon-material-containing iron oxide briquette composition produced by the method specified in Item (9) or (10) in the moving hearth reduction furnace, the amount of a carbon material blended in the carbon-material-containing iron oxide briquette composition being adjusted, includes a step of adjusting the heat treatment temperature within a temperature range which is higher than the total-slag solidus temperature $T_{S \cdot S}$ and which is lower than the total-slag liquidus temperature $T_{L \cdot S}$ such that the carbon use efficiency $\eta_c$ defined by the following equation ranges from 0.08 to 0.12 to obtain direct reduced iron with a carbon content of 6% by mass or less:

$$\text{Equation} \qquad \eta_c = NCO_2 \,/\, (NCO + NCO_2)$$

wherein NCO and $NCO_2$ are the total molar quantity of CO and the total molar quantity of $CO_2$, respectively, generated from the carbon-material-containing iron oxide briquette composition during the heat treatment.

Advantageous Effects of Invention

According to the present invention, direct reduced iron which contains a sufficient amount of carbon and which has increased crushing strength can be produced using a carbon-material-containing iron oxide briquette composition in which the solidus temperature of an $Al_2O_3$-CaO-$SiO_2$ ternary slag in the carbon-material-containing iron oxide briquette composition is adjusted to 1,300°C or lower and in which raw materials are blended such that residual carbon in direct reduced iron that is produced by heating the carbon-material-containing iron oxide briquette composition at a temperature which is higher than the solidus temperature thereof and which is lower than the liquidus temperature thereof accounts for 6% by mass or less.

Furthermore, according to the present invention, a pre-melt slag in which the solidus temperature of an $Al_2O_3$-CaO-$SiO_2$ ternary slag is 1,300°C or lower, preferably 1,200°C or lower, is blended in a carbon-material-containing iron oxide briquette composition. Therefore, when the carbon-material-containing iron oxide briquette composition is heat-treated in a moving hearth reduction furnace, a portion of the pre-melt slag is readily melted and the sintering reaction of metallic iron is promoted, whereby direct reduced iron with increased crushing strength can be produced.

Brief Description of Drawings

[Fig. 1] Fig. 1 is a phase diagram of an $Al_2O_3$-CaO-$SiO_2$ ternary slag for illustrating the relationship between the slag composition and solidus temperature of a carbon-material-containing iron oxide briquette composition according to a first embodiment.
[Fig. 2] Fig. 2 is a phase diagram of an $Al_2O_3$-CaO-$SiO_2$ ternary slag for illustrating the relationship between the slag composition and solidus temperature of a carbon-material-containing iron oxide briquette composition according to a second embodiment.
[Fig. 3] Fig. 3 is a vertical sectional view outlining a compact high-frequency rapid heating furnace used in a reduction test.
[Fig. 4] Fig. 4 includes illustrations each schematically showing a heating pattern used in a reduction test, Fig. 4(a) shows a heating pattern used in Experiment 1, and Fig. 4(a) shows a heating pattern used in Experiment 2.
[Fig. 5] Fig. 5 is a phase diagram of an $Al_2O_3$-CaO-$SiO_2$ ternary slag for illustrating the relationship between the slag composition and solidus temperature of carbon-material-containing iron oxide pellets used in a reduction test of Experiment 1.
[Fig. 6] Fig. 6 is a phase diagram of an $Al_2O_3$-CaO-$SiO_2$ ternary slag for illustrating the relationship between the slag composition and solidus temperature of carbon-material-containing iron oxide pellets used in a reduction test of Experiment 2.

Description of Embodiments

The present invention will now be described in detail.

(First Embodiment)

A first embodiment of the present invention is characterized in that the component composition of slag in a carbon-material-containing iron oxide briquette composition (hereinafter also simply referred to as "briquette composition") and the amount of a carbon material blended therein are within a specific range. This allows product direct reduced iron which is an iron source suitable for blast furnaces, electric furnaces, steel converters, and the like; which contains a sufficient amount of carbon; and which has increased crushing strength to be obtained.

In particular, the amount of the blended carbon material is such that the solidus temperature of an $Al_2O_3$-CaO-$SiO_2$ ternary slag that is determined from the content of $Al_2O_3$, CaO, and $SiO_2$ in the briquette composition is 1,300°C or lower and residual carbon in direct reduced iron produced by heat-treating the briquette composition in a moving hearth reduction furnace (for example, a rotary hearth reduction furnace) at a temperature which is higher than the solidus temperature thereof and which is lower than the liquidus temperature thereof accounts for 6% or less.

Reasons for limiting the values of the above parameters are described below. [The solidus temperature of an $Al_2O_3$-CaO-$SiO_2$ ternary slag that is determined from the content of $Al_2O_3$, CaO, and $SiO_2$ in the briquette composition is 1,300°C or lower]

The reason why the $Al_2O_3$-CaO-$SiO_2$ ternary slag is designated is that components of slag present in the briquette composition are principally $Al_2O_3$, CaO, and $SiO_2$.

The reason why the liquidus temperature of the ternary slag is not specified but the solidus temperature thereof is specified is as described below.

While the liquidus temperature is the temperature at which slag melts completely, the solidus temperature is the temperature at which slag begins to melt partially. If the liquidus temperature of slag is specified and the briquette composition is heated at a temperature higher than the liquidus temperature, then the slag components are completely melted at once and therefore a large number of voids are formed in the briquette composition to prevent the sintering of metallic iron; hence, high-strength direct reduced iron cannot be obtained. In contrast, if the solidus temperature of slag is specified and the briquette composition is heated at a temperature higher than the solidus temperature, then a solid-liquid coexistence state in which the slag components are not completely melted but are partially melted is obtained, resulting in that the formation of voids due to the melting of slag can be suppressed and the sintering of metallic iron can be promoted. Thus, the strength development of direct reduced iron is not due to the formation of a slag phase but is due to the sinter structure of metallic iron.

The reason why the solidus temperature is set to 1,300°C or lower is that in the case of producing direct reduced iron in a rotary hearth reduction furnace, the fact that the heating temperature is often 1,300°C or lower is taken into account. Furthermore, the reason why the solidus temperature is more preferably 1,200°C or lower is that the sintering of metallic iron can be promoted in such a manner that a solid-liquid coexistence state is created at the initial stage of heat treatment.

The solidus temperature of the $Al_2O_3$-CaO-$SiO_2$ ternary slag can be determined, for example, as described below.

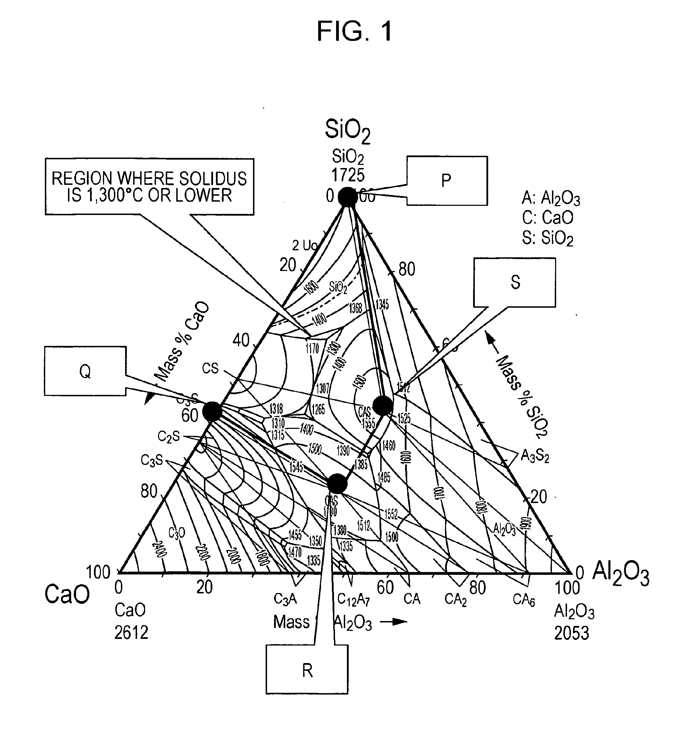

Fig. 1 is a phase equilibrium diagram (SLAG ATLAS 2nd Edition (1995), Verlag Stahleisen Gmbh, p. 105) of a CaO-$SiO_2$-$Al_2O_3$ ternary composite oxide commonly used. In this figure, although the liquidus temperature ($T_L$) is illustrated, the solidus temperature (Ts) is not illustrated. Therefore, the solidus temperature (Ts) of the ternary composite oxide has been calculated using the thermodynamic equilibrium calculation software "FactSage" (developed by Thermfact and GTT-Technologies). A region where the solidus temperature (Ts) is 1,300°C or lower is hatched in this figure (a region surrounded by points P, Q, R, and S, at which each composition is as shown in Table 1).

[Table 1]

| Points on ternary phase diagram | Component composition (mass percent) | | |
|---|---|---|---|
| | $SiO_2$ | CaO | $Al_2O_3$ |
| P | 100 | 0 | 0 |
| Q | 41.7 | 58.3 | 0 |
| R | 21.9 | 40.9 | 37.2 |
| S | 43.2 | 20.2 | 36.6 |

Thus, the amounts of an iron oxide-containing material, the carbon material, and auxiliary materials blended in the briquette composition may be adjusted such that the composition of the ternary slag in the briquette composition is within the above region. Since the amount of the carbon material blended in the briquette composition is finally determined depending on the amount of residual carbon in direct reduced iron as described below, the composition of the ternary slag is adjusted by principally adjusting the amounts of the iron oxide-containing material and auxiliary materials blended. That is, the composition of the ternary slag can be adjusted by adjusting the blending ratio of steelmaking dust and iron ore which are iron oxide materials and which have different slag component compositions and the amounts of an added calcium oxide-containing substance such as limestone or caustic lime and/or a silicon dioxide-containing substance such as silica stone, the calcium oxide-containing substance and/or the silicon dioxide-containing substance being an auxiliary material.

[Residual carbon in direct reduced iron that is produced in such a manner that the briquette composition is heat-treated in the moving hearth reduction furnace at a temperature which is higher than the solidus temperature and which is lower than the liquidus temperature is 6% by mass or less]

The reason why the heat treatment temperature is higher than the solidus temperature and lower than the liquidus temperature is that the sintering of metallic iron is promoted by partially liquefying slag. Herein, the heat treatment temperature means the maximum atmospheric temperature in the moving hearth reduction furnace.

In the method disclosed in Patent Literature 8, residual carbon in direct reduced iron is limited to 2% by mass or less. However, in the first embodiment of the present invention, the strength of direct reduced iron with higher carbon content can be ensured by properly controlling the melting of the slag components as described above. Where the carbon content exceeds 6% by weight, the coalescence of metallic iron is inhibited and therefore the crushing strength of direct reduced iron is reduced (see Table 5 in an example below). From the viewpoint of ensuring the strength of direct reduced iron, residual carbon in direct reduced iron is preferably low. However, from the viewpoint of improving the energy efficiency of blast furnaces, steel converters, electric furnaces, and the like, higher C content is preferred; hence, residual carbon in direct reduced iron is preferably more than 2% by mass and more preferably 3% by mass or more.

The amount of residual carbon in direct reduced iron can be adjusted by adjusting the amount (carbon content) of the carbon material blended in the carbon-material-containing iron oxide briquette composition and can also be adjusted by adjusting, for example, the blending ratio of blast furnace dust with high carbon content or the amount of the carbon material, such as coal or coke breeze, in the course of producing the carbon-material-containing iron oxide briquette composition.

The amount of the carbon material blended in the carbon-material-containing iron oxide briquette composition can be set in accordance with a thought below.

In the case of using a carbon material containing fixed carbon and volatile matter such as coal, the volatile matter is removed at 500°C to 600°C in the course of heating the briquette composition in the rotary hearth reduction furnace. The volatile matter hardly contributes to the reduction of iron oxide. When the temperature of the briquette composition increases to reach about 700°C, the reduction reaction of iron oxide is substantially initiated by fixed carbon as well known.

Thus, the mass $X_c$ of fixed carbon in the briquette composition can be regarded as the sum of the mass $X_{CT}$ of carbon needed to completely reduce iron oxide and zinc oxide into metals and the mass $X_{CR}$ of residual carbon in direct reduced iron after reduction as shown in Equation (2) below.

$$X_c = X_{CT} + X_{CR} \qquad \text{Equation (2)}$$

Herein, the mass $X_{CT}$ of carbon needed to completely reduce iron oxide and zinc oxide into metals can be estimated from Equation (3) below.

$$X_{CT} = (12 / 16) \cdot X_0 / (1 + \eta_c) \qquad \text{Equation (3)}$$

Herein, $X_0$ is the sum of the mass of oxygen in iron oxide in the carbon-material-containing iron oxide briquette composition and the mass of oxygen in zinc oxide therein and $\eta_c$ is carbon use efficiency (described below in detail).

The reason why the reduction of zinc oxide is taken into account in addition to iron oxide in Equation (3) is that in the case of using steelmaking dust as a raw material, a sizable amount of zinc oxide is contained therein and a sizable mass of carbon is needed to reduce the zinc oxide contained therein. However, the content of an oxide of a non-ferrous metal such as lead or an alkali metal is less than that of iron oxide or zinc oxide and therefore is negligible.

The term $1 / (1 + \eta_c)$ in Equation (3) means that as the proportion of a $CO_2$ gas component in a $CO$-$CO_2$ gas mixture generated from the reduction reaction increases, the mass of carbon needed to completely reduce iron oxide and zinc oxide into metals decreases.

Herein, the carbon use efficiency $\eta_c$ in heat-treating the carbon-material-containing iron oxide briquette composition in the rotary hearth reduction furnace can be determined in such a manner that a test in which direct reduced iron is prepared by heat-treating the carbon-material-containing iron oxide briquette composition in an inert gas atmosphere in a compact high-frequency rapid heating furnace used in an example below is performed and the composition of gas, containing CO and $CO_2$, generated from the briquette composition in the test is analyzed. As a result, it has become clear that the carbon use efficiency $\eta_c$ varies depending on the heat treatment temperature and ranges from 0.08 to 0.12.

Thus, the carbon use efficiency $\eta_c$ is set between 0.08 and 0.12 depending on the heat treatment temperature of a furnace actually used, the mass $Xc_T$ of carbon needed to reduce iron oxide is calculated using Equation (3), and the mass Xc of fixed carbon in the briquette composition is then calculated using Equation (2). The amount of the carbon material blended in the briquette composition can be set on the basis of this calculation result.

In the case of heat-treating the carbon-material-containing iron oxide briquette composition produced as described above in the rotary hearth reduction furnace, the heat treatment temperature may be adjusted within a temperature range which is higher than the solidus temperature and which is lower than the liquidus temperature such that the carbon use efficiency $\eta_c$ defined by reprinted Equation (1) below ranges from 0.08 to 0.12.

$$\eta_c = NCO_2 \,/\, (NCO + NCO_2) \qquad \text{reprinted Equation (1)}$$

Herein, NCO and $NCO_2$ are the total molar quantity of CO and the total molar quantity of $CO_2$, respectively, generated from the carbon-material-containing iron oxide briquette composition during the heat treatment.

The carbon use efficiency $\eta_c$ can be varied in such a manner that the heat treatment temperature is adjusted between the solidus temperature and the liquidus temperature. As, for example, the heat treatment temperature is increased, a carbon solution reaction ($C + CO_2 \rightarrow 2CO$) is promoted in the briquette composition; hence, the carbon use efficiency $\eta_c$ tends to decrease.

(Modification)

In the above embodiment, the rotary hearth furnace is exemplified as a kind of moving hearth reduction furnace. Instead, a linear furnace may be used.

(Second Embodiment)

A second embodiment of the present invention is characterized in that a pre-melt slag in which the solidus temperature (pre-melt slag solidus temperature) $T_{S \cdot P}$ of an $Al_2O_3$-CaO-$SiO_2$ ternary slag is preferably 1,300°C or lower and more preferably 1,200°C or lower is blended in a carbon-material-containing iron oxide briquette composition (hereinafter also simply referred to as "briquette composition"). This allows product direct reduced iron which is an iron source suitable for blast furnaces, electric furnaces, steel converters, and the like and which has increased crushing strength to be obtained.

Reasons for setting the above requirements are described below.

The reason why the pre-melt slag is used is that whereas conventional techniques take a long time to form slag in the case of using, for example, auxiliary materials such as limestone (a CaO source) and silica stone (an $SiO_2$ source) to adjusted slag components in the carbon-material-containing iron oxide briquette composition because CaO and $SiO_2$ themselves have a high melting temperature (melting point) and therefore a liquid phase is unlikely to be generated from these auxiliary materials, the pre-melt slag, which itself is already slag, has a melting temperature and therefore a liquid phase is generated in a short time to promote the sintering of metallic iron.

The reason why the $Al_2O_3$-CaO-$SiO_2$ ternary slag is designated is that components of the pre-melt slag are principally $Al_2O_3$, CaO, and $SiO_2$.

The reason why the liquidus temperature of the ternary slag is not specified but the solidus temperature thereof is specified is as described below.

While the liquidus temperature is the temperature at which the pre-melt slag melts completely, the solidus temperature is the temperature at which slag begins to melt partially. If the liquidus temperature of the pre-melt slag is specified and the briquette composition is heated at a temperature higher than the liquidus temperature, then the pre-melt slag is completely melted at once and therefore a large number of voids are formed in the briquette composition to prevent the sintering of metallic iron; hence, high-strength direct reduced iron cannot be obtained. In contrast, if the solidus temperature of the pre-melt slag is specified and the briquette composition is heated at a temperature higher than the solidus temperature, then a solid-liquid coexistence state in which the pre-melt slag is not completely melted but is partially melted is obtained, resulting in that the formation of voids due to the melting of the pre-melt slag can be suppressed and the sintering of metallic iron can be promoted. Thus, the strength development of direct reduced iron is not due to the formation of a slag phase but is due to the sinter structure of metallic iron.

The reason why the solidus temperature is set to 1,300°C or lower is that in the case of producing direct reduced iron in a rotary hearth reduction furnace, the fact that the heating temperature is often 1,300°C or lower is taken into account. Furthermore, the reason why the solidus temperature is more preferably 1,200°C or lower is that the sintering of metallic iron can be promoted in such a manner that a solid-liquid coexistence state is created at the initial stage of heat treatment.

The solidus temperature (pre-melt slag solidus temperature) $T_{S \cdot P}$ of the $Al_2O_3$-CaO-$SiO_2$ ternary slag can be determined, for example, as described below.

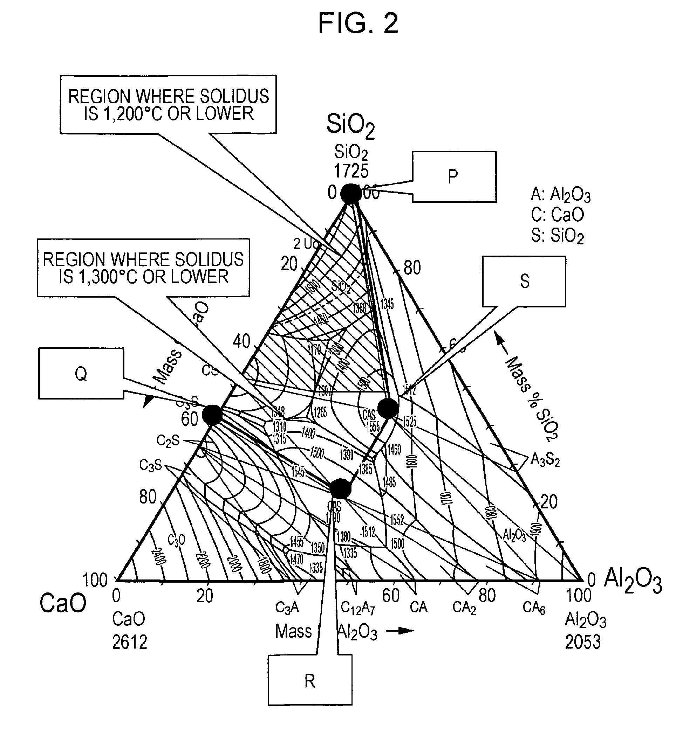

Fig. 2 is a phase equilibrium diagram (SLAG ATLAS 2nd Edition (1995), Verlag Stahleisen Gmbh, p. 105) of a CaO-$SiO_2$-$Al_2O_3$ ternary composite oxide commonly used. In this figure, although the liquidus temperature ($T_L$) is illustrated, the solidus temperature (Ts) is not illustrated. Therefore, the solidus temperature (Ts) of the ternary composite oxide has been calculated using the thermodynamic equilibrium calculation software "FactSage" (developed by Thermfact and GTT-Technologies). A region where the solidus temperature (Ts) is 1,300°C or lower (a region surrounded by points P, Q, R, and S, at which each composition is as shown in Table 2) and a region where the solidus temperature (Ts) is 1,200°C or lower are hatched in this figure.

[Table 2]

| Points on ternary phase diagram | Component composition (mass percent) | | |
| --- | --- | --- | --- |
| | $SiO_2$ | CaO | $Al_2O_3$ |
| P | 100 | 0 | 0 |
| Q | 41.7 | 58.3 | 0 |
| R | 21.9 | 40.9 | 37.2 |
| S | 43.2 | 20.2 | 36.6 |

Thus, the pre-melt slag may be selected and blended such that the composition of the ternary slag in the pre-melt slag blended in the briquette composition is within the above region. Alternatively, a plurality of pre-melt slags which preferably have a pre-melt slag solidus temperature $T_{S \cdot P}$ of 1,300°C or lower and more preferably 1,200°C or lower and which have different compositions may be blended in combination.

For example, a blast furnace slag and a steelmaking slag can be used as the pre-melt slag. Examples of the steelmaking slag include steel converter slags, hot-metal pretreatment slags, and electric furnace slags.

In the above description, only the solidus temperature (pre-melt slag solidus temperature) $T_{S \cdot P}$ of the ternary slag blended in the briquette composition is specified. Furthermore, the blending ratio of the pre-melt slag is preferably adjusted such that the solidus temperature (total-slag solidus temperature) $T_{S \cdot S}$ of the $Al_2O_3$-CaO-$SiO_2$ ternary slag that is determined from the content of $Al_2O_3$, CaO, and $SiO_2$ in the briquette composition in which the pre-melt slag is blended is 1,300°C or lower, preferably 1,200°C or lower, and the melt ratio of the $Al_2O_3$-CaO-$SiO_2$ ternary slag in direct reduced iron that is produced in such a manner that the briquette composition is heat-treated in the moving hearth reduction furnace at a heat treatment temperature which is higher than the total-slag solidus temperature $T_{S \cdot S}$ and which is lower than the liquidus temperature (total-slag liquidus temperature) $T_{L \cdot S}$ of the $Al_2O_3$-CaO-$SiO_2$ ternary slag that is determined from the content of $Al_2O_3$, CaO, and $SiO_2$ in the briquette composition accounts for 1% to 20%.

The total-slag solidus temperature $T_{S \cdot S}$ is limited to 1,300°C or lower, preferably 1,200°C or lower, as described above; hence, a liquid state can be maintained even if a liquid phase (melted slag) generated from the pre-melt slag reacts with a gangue component in an iron oxide-containing material and ash contained in a carbon material to cause a change in slag composition when the briquette composition is heated in the furnace.

The total-slag solidus temperature $T_{S \cdot S}$ can be determined by substantially the same method as that used to determine the pre-melt slag solidus temperature $T_{S \cdot P}$.

Furthermore, the melt ratio of the $Al_2O_3$-CaO-$SiO_2$ ternary slag in direct reduced iron is controlled within the range of 1% to 20%; hence, an appropriate amount of slag is melted, whereby the sintering reaction of metallic iron can be reliably promoted. That is, when the melt ratio thereof is less than 1%, the amount of the melt of slag is too small and therefore the sintering of metallic iron does not proceed sufficiently. In contrast, when the melt ratio thereof is more than 20%, the amount of the slag melt is excessive and therefore the strength development mechanism of cooled direct reduced iron changes from the sintering control of metallic iron to slag bonding control. Hence, brittle fracture is likely to occur at slag bonding sites and the yield of direct reduced iron decreases. The melt ratio preferably ranges from 5% to 18%. The upper limit and lower limit of the melt ratio may be arbitrarily combined into the range of the melt ratio.

Herein, the melt ratio of the $Al_2O_3$-CaO-$SiO_2$ ternary slag in direct reduced iron is defined as the mass ratio of a portion of the $Al_2O_3$-CaO-$SiO_2$ ternary slag in the direct reduced iron to the direct reduced iron, the portion being converted into a liquid (that is, a liquid phase) at the heat treatment temperature.

The carbon material in the briquette composition contains ash, of which the composition affects the determination of the composition of a total briquette composition ternary slag below. Since the amount of the carbon material blended in the briquette composition is finally determined depending on the amount of residual carbon in direct reduced iron as described below, the composition of the $Al_2O_3$-CaO-$SiO_2$ ternary slag (hereinafter simply referred to as "total briquette composition ternary slag") that is determined from the content of $Al_2O_3$, CaO, and $SiO_2$ in the total briquette composition is adjusted by principally adjusting the amounts of the iron oxide-containing material, the pre-melt slag, and auxiliary materials blended. That is, the composition of the total briquette composition ternary slag can be adjusted by adjusting the amount of the added pre-melt slag and further adjusting the amounts of an added calcium oxide-containing substance such as limestone or caustic lime and a silicon dioxide-containing substance such as silica stone as required, the calcium oxide-containing substance and/or the silicon dioxide-containing substance being an auxiliary material, depending on the blending ratio of steelmaking dust and iron ore which are iron oxide materials and which have different slag component compositions.

The amount of the carbon material blended in the briquette composition is preferably adjusted such that the carbon use efficiency $\eta_c$ defined by an equation below ranges from 0.08 to 0.12 and such that residual carbon in direct reduced iron obtained by heat-treating the briquette composition at the heat treatment temperature, which is higher than the total-slag solidus temperature $T_{S \cdot S}$ and is lower than the total-slag liquidus temperature $T_{L \cdot S}$, accounts for 6% by mass or less.

Herein, the heat treatment temperature means the maximum atmospheric temperature in the moving hearth reduction furnace.

The reason why the heat treatment temperature is adjusted to a temperature which is higher than the total-slag solidus temperature $T_{S \cdot S}$ and which is lower than the total-slag liquidus temperature $T_{L \cdot S}$ is that the sintering of metallic iron is promoted by partially liquefying slag. In particular, when the heat treatment temperature is, for example, 1,300°C, the composition of slag may be selected such that the total-slag liquidus temperature $T_{L \cdot S}$ is higher than 1,300°C.

In the method disclosed in Patent Literature 8, residual carbon in direct reduced iron is limited to 2% by mass or less. However, in the second embodiment of the present invention, the strength of direct reduced iron with higher carbon content can be ensured by properly controlling the melting of the slag components as described above. Where the carbon content exceeds 6% by weight, the coalescence of metallic iron is inhibited and therefore the crushing strength of direct reduced iron is reduced. From the viewpoint of ensuring the strength of direct reduced iron, residual carbon in direct reduced iron is preferably low. However, from the viewpoint of improving the energy efficiency of blast furnaces, steel converters, electric furnaces, and the like, higher C content is preferred; hence, residual carbon in direct reduced iron is preferably more than 2% by mass and more preferably 3% by mass or more.

The amount of residual carbon in direct reduced iron can be adjusted by adjusting the amount (carbon content) of the carbon material blended in the carbon-material-containing iron oxide briquette composition and can also be adjusted by adjusting, for example, the blending ratio of blast furnace dust with high carbon content or the amount of the carbon material, such as coal or coke breeze, in the course of producing the carbon-material-containing iron oxide briquette composition.

The amount of the carbon material blended in the carbon-material-containing iron oxide briquette composition can be set in accordance with a thought below.

In the case of using a carbon material containing fixed carbon and volatile matter such as coal, the volatile matter is removed at 500°C to 600°C in the course of heating the briquette composition in the rotary hearth reduction furnace. The volatile matter hardly contributes to the reduction of iron oxide. When the temperature of the briquette composition increases to reach about 700°C, the reduction reaction of iron oxide is substantially initiated by fixed carbon as well known.

Thus, the mass $Xc$ of fixed carbon in the briquette composition can be regarded as the sum of the mass $Xc_T$ of carbon needed to completely reduce iron oxide and zinc oxide into metals and the mass $Xc_R$ of residual carbon in direct reduced iron after reduction as shown in Equation (2) below.

$$Xc = Xc_T + Xc_R \qquad \text{Equation (2)}$$

Herein, the mass $Xc_T$ of carbon needed to completely reduce iron oxide and zinc oxide into metals can be estimated from Equation (3) below.

$$Xc_T = (12 / 16) \cdot X_0 / (1 + \eta_c) \qquad \text{Equation (3)}$$

Herein, $X_0$ is the sum of the mass of oxygen in iron oxide in the carbon-material-containing iron oxide briquette composition and the mass of oxygen in zinc oxide therein and $\eta_c$ is carbon use efficiency (described below in detail).

The reason why the reduction of zinc oxide is taken into account in addition to iron oxide in Equation (3) is that in the case of using steelmaking dust as a raw material, a sizable amount of zinc oxide is contained therein and a sizable mass of carbon is needed to reduce the zinc oxide contained therein. However, the content of an oxide of a non-ferrous metal such as lead or an alkali metal is less than that of iron oxide or zinc oxide and therefore is negligible.

The term $1 / (1 + \eta_c)$ in Equation (3) means that as the proportion of a $CO_2$ gas component in a $CO$-$CO_2$ gas mixture generated from the reduction reaction increases, the mass of carbon needed to completely reduce iron oxide and zinc oxide into metals decreases.

Herein, the carbon use efficiency $\eta_c$ in heat-treating the carbon-material-containing iron oxide briquette composition in the rotary hearth reduction furnace can be determined in such a manner that a test in which direct reduced iron is prepared by heat-treating the carbon-material-containing iron oxide briquette composition in an inert gas atmosphere in a compact high-frequency rapid heating furnace used in an example below is performed and the composition of gas, containing CO and $CO_2$, generated from the briquette composition in the test is analyzed. As a result, it has become clear that the carbon use efficiency $\eta_c$ varies depending on the heat treatment temperature and ranges from 0.08 to 0.12.

Thus, the carbon use efficiency $\eta_c$ is set between 0.08 and 0.12 depending on the heat treatment temperature of a furnace actually used, the mass $Xc_T$ of carbon needed to reduce iron oxide is calculated using Equation (3), and the mass Xc of fixed carbon in the briquette composition is then calculated using Equation (2). The amount of the carbon material blended in the briquette composition can be set on the basis of this calculation result.

In the case of heat-treating the carbon-material-containing iron oxide briquette composition produced as described above in the rotary hearth reduction furnace, the heat treatment temperature may be adjusted within a temperature range which is higher than the total-slag solidus temperature $T_{S \cdot S}$ and which is lower than the total-slag liquidus temperature $T_{L \cdot S}$ such that the carbon use efficiency $\eta_c$ defined by reprinted Equation (1) below ranges from 0.08 to 0.12.

$$\eta_c = NCO_2 / (NCO + NCO_2) \qquad \text{reprinted Equation (1)}$$

Herein, NCO and $NCO_2$ are the total molar quantity of CO and the total molar quantity of $CO_2$, respectively, generated from the carbon-material-containing iron oxide briquette composition during the heat treatment.

The carbon use efficiency $\eta_c$ can be varied in such a manner that the heat treatment temperature is adjusted between the solidus temperature and the liquidus temperature. As, for example, the heat treatment temperature is increased, a carbon solution reaction ($C + CO_2 \rightarrow 2CO$) is promoted in the briquette composition; hence, the carbon use efficiency $\eta_c$ tends to decrease.

(Modification)

In the above embodiment, the rotary hearth furnace is exemplified as a kind of moving hearth reduction furnace. Instead, a linear furnace may be used. Examples

(Experiment 1)

In order to verify the effect of the first embodiment of the present invention, a test below was performed using raw materials shown in Tables 3(a) to 3(c).

[Table 3]

| (a) Iron oxide-containing material | | | | | | |
|---|---|---|---|---|---|---|
| | | | | | | (Unit: mass percent) |
| Iron oxide-containing material | T.Fe | FeO | $SiO_2$ | CaO | $Al_2O_3$ | MgO |
| A | 67.17 | 0.02 | 1.41 | 0.01 | 1.07 | 0.04 |
| B | 64.13 | 0.23 | 3.82 | 0.07 | 1.85 | 0.14 |
| C | 45.87 | 2.82 | 6.14 | 15.91 | 2.26 | 1.43 |

(continued)

| (b) Carbon material | | | | | | | | | |
|---|---|---|---|---|---|---|---|---|---|
| | | | | | | | | | (Unit: mass percent) |
| Carbon material | Industrial analysis | | | Elemental analysis | Chemical analysis of ash | | | | |
| | Volatile matter | Ash | Fixed carbon | T.C | T.Fe | $SiO_2$ | CaO | $Al_2O_3$ | MgO |
| D | 17.95 | 9.43 | 72.62 | 83.46 | 4.70 | 45.93 | 6.06 | 29.24 | 2.24 |

| (c) Auxiliary materials (Calcium oxide-containing material and silicon dioxide-containing material) | | | | | |
|---|---|---|---|---|---|
| | | | | | (Unit: mass percent) |
| Auxiliary materials | | $SiO_2$ | CaO | $Al_2O_3$ | MgO |
| E | Slaked lime (CaO source) | <0.1 | 72.94 | 0.15 | 0.28 |
| F | Limestone (CaO source) | <0.1 | 56.23 | 0.12 | 0.23 |
| G | Silica stone ($SiO_2$ source) | 96.83 | 1.68 | 0.02 | 0.08 |

(Test Method)

In this example, carbon-material-containing iron oxide briquette compositions were used in the form of pellets.

To an iron oxide-containing material (a), a carbon material (b), and auxiliary materials (c) blended at various blending ratios as shown in Table 4, 1.5% by mass (constant) of flour serving as a binder and an appropriate amount of water were added. These materials were formed into raw pellets with a diameter of 17 mm using a tire granulator. The raw pellets were dried at 105°C for 20 hours in a drier, whereby adsorbed water was completely removed therefrom. The dried pellets (carbon-material-containing iron oxide pellets) had an apparent density of 1,800 kg/m$^3$ to 2,000 kg/m$^3$.

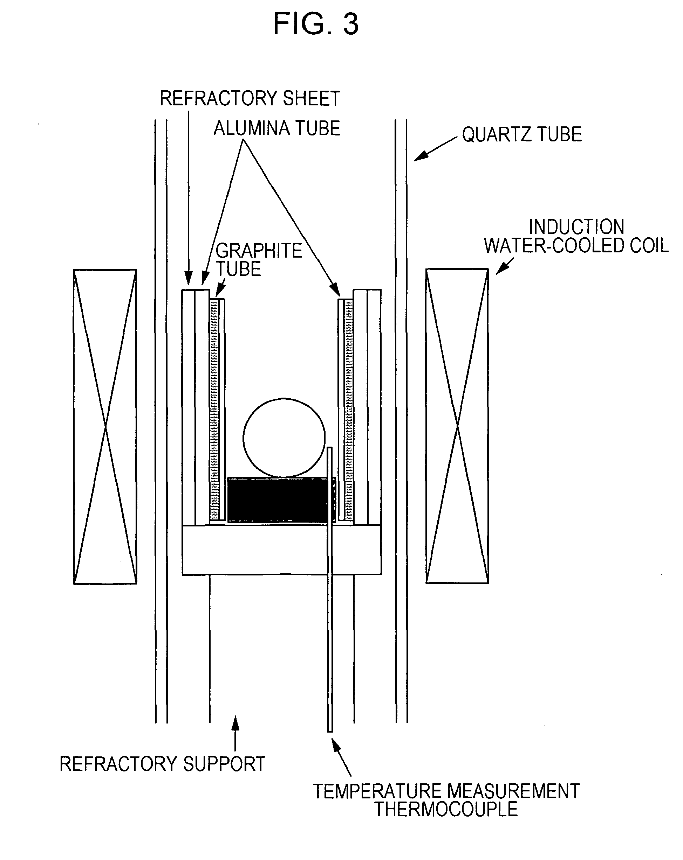

The dried pellets (carbon-material-containing iron oxide pellets) were heat-treated in a compact high-frequency rapid heating furnace (manufactured by Sekisui Medical Electronics, the type of an oscillator being MU-1700, the type of a furnace being UD-250) outlined in Fig. 3. For a heating sleeve, a graphite tube coated with alumina was used to prevent graphite from being depleted by a $CO_2$-containing gas generated by heating the pellets.

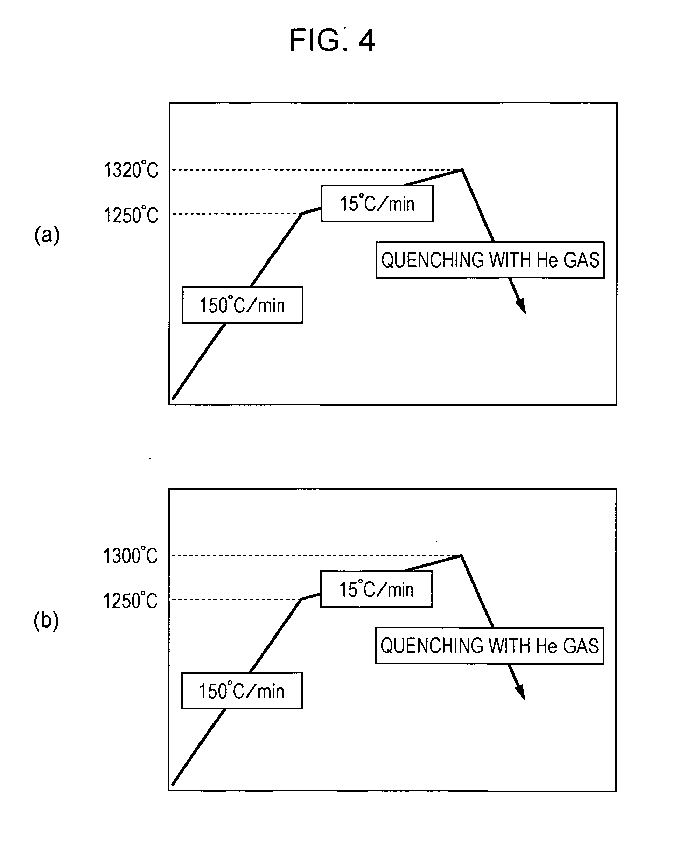

A heating pattern was as follows: as shown in Fig. 4(a), heating was performed at a rate of 150°C/min from room temperature to 1,250°C and a rate of 15°C/min from 1,250°C to 1,320°C and was stopped immediately after reaching 1,320°C and quenching was performed using a He gas. A heating atmosphere was supplied with an $N_2$ gas at a rate of 3 NL/min and a cooling atmosphere was supplied with a He gas at a rate of 3 NL/min.

[Table 4]

| | | | | | | |
|---|---|---|---|---|---|---|
| | | | | (Unit: mass percent) | | |
| | (a) Iron oxide-containing material | (b) Carbon material | (c) Auxiliary materials | | (Others) | |
| | | | CaO source | $SiO_2$ source | | |
| Inventive Example 1-1 | A:76.00 | D:21.00 | E:1.50 | - | - | |
| Inventive Example 1-2 | A:76.00 | D:20.00 | E:2.50 | - | - | |
| Inventive Example 1-3 | A:75.50 | D:20.50 | F:1.50 | G:1.00 | - | |
| Inventive Example 1-4 | B:76.00 | D:20.00 | F:2.00 | G:0.50 | - | |
| Comparative Example 1-1 | A:76.00 | D:20.50 | F:0.75 | G:1.25 | - | |

(continued)

| | (a) Iron oxide-containing material | (b) Carbon material | (c) Auxiliary materials | | (Others) |
|---|---|---|---|---|---|
| | | | CaO source | SiO$_2$ source | |
| Comparative Example 1-2 | B:76.00 | D:20.50 | F:0.75 | G:1.25 | - |
| Comparative Example 1-3 | C:85.75 | D:12.75 | - | - | - |
| Comparative Example 1-4 | A:75.00 | D:21.00 | E:1.50 | - | Al$_2$O$_3$:1.00 |
| Comparative Example 1-5 | A:74.50 | D:23.00 | E:1.50 | - | - |
| Note: The remainder is 1.5% by mass of flour. | | | | | |

(Unit: mass percent)

Direct reduced iron obtained by heat treatment in accordance with the above heating pattern was measured for carbon content and crushing strength. The results are shown in Table 5. In this table, the following properties are summarized: the content of SiO$_2$, CaO, and Al$_2$O$_3$ in each unreduced pellet (carbon-material-containing iron oxide pellet) and the solidus temperature Ts, liquidus temperature $T_L$, and liquid phase ratio of a ternary slag in the pellet.

The liquid phase ratio is located between a solidus temperature and liquidus temperature in an equilibrium diagram and is defined as the mass percentage of a liquid in a solid-liquid mixture (that is, a solid phase-liquid phase mixture) (see paragraph [0036] of Japanese Unexamined Patent Application Publication No. 2005-48197). In this example, the mass percentage (%) of a liquid in a solid-liquid mixture at the heat treatment temperature (1,300°C) was calculated using the thermodynamic equilibrium calculation software "FactSage".

The unit kgf of the crushing strength of direct reduced iron in this table corresponds to 9.80665 N.

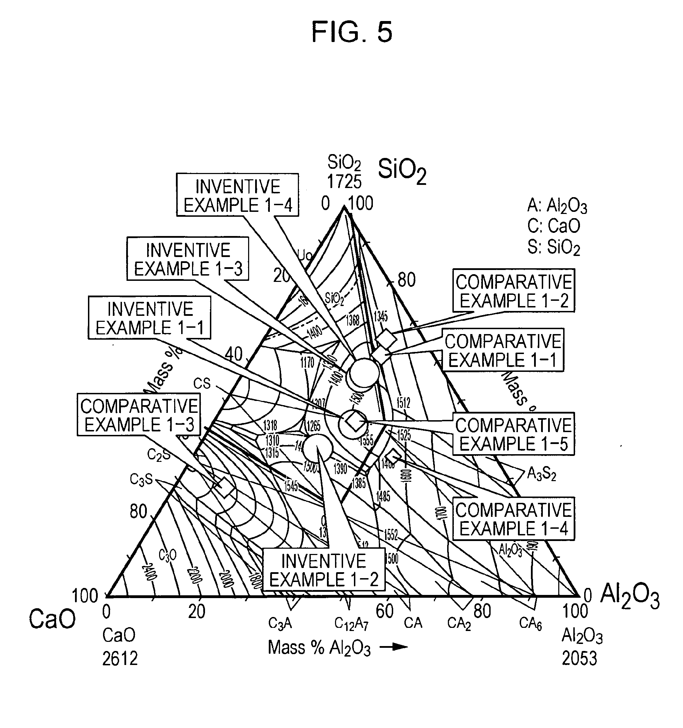

Fig. 5 shows a diagram obtained by plotting the slag composition of each of the carbon-material-containing iron oxide pellets of Inventive Examples 1-1 to 1-4 and Comparative Examples 1-1 to 1-5 on the ternary phase diagram of Fig. 1.

In all of the inventive and comparative examples, the carbon use efficiency ranges from 0.08 to 0.12.

The carbon-material-containing iron oxide pellets of Inventive Examples 1-1 to 1-4 meet requirements for the first embodiment of the present invention because the solidus temperature Ts of an Al$_2$O$_3$-CaO-SiO$_2$ ternary slag that is determined from the content of Al$_2$O$_3$, CaO, and SiO$_2$ in the pellets is 1,300°C or lower and the amount of residual carbon in direct reduced iron obtained by heat treatment at 1,320°C, which is higher than the solidus temperature Ts of the ternary slag and lower than the liquidus temperature $T_L$ thereof, is 6% by mass or less (more than 2% by mass). The crushing strength of the direct reduced iron is high, more than 19 kgf/piece.

In contrast, none of the carbon-material-containing iron oxide pellets of Comparative Examples 1-1 to 1-4 meets the requirements for the first embodiment of the present invention because the solidus temperature Ts of an Al$_2$O$_3$-CaO-SiO$_2$ ternary slag that is determined from the content of Al$_2$O$_3$, CaO, and SiO$_2$ in the pellets exceeds 1,300°C. The crushing strength of obtained direct reduced iron is low, less than 6 kgf/piece.

The carbon-material-containing iron oxide pellets of Comparative Example 1-5 do not meet the requirements for the first embodiment of the present invention because although the solidus temperature Ts of an Al$_2$O$_3$-CaO-SiO$_2$ ternary slag that is determined from the content of Al$_2$O$_3$, CaO, and SiO$_2$ in the pellets is 1,300°C or lower, the amount of residual carbon in direct reduced iron obtained by heat treatment at 1,320°C, which is higher than the solidus temperature Ts of the ternary slag and lower than the liquidus temperature $T_L$ thereof, exceeds 6% by mass. The crushing strength of the obtained direct reduced iron is low, less than 3 kgf/piece.

[Table 5]

| | Ternary slag in pellet (carbon-material-containing iron oxide briquette composition) | | | | | | Reduced iron | |
|---|---|---|---|---|---|---|---|---|
| | $SiO_2$ (mass percent) | CaO (mass percent) | $Al_2O_3$ (mass percent) | Solidus temperature $T_S$ (°C) | Liquidus temperature $T_L$ (°C) | Liquid phase ratio (%) | Residual C (mass percent) | Crushing strength (kgf/ piece) |
| Inventive Example 1-1 | 1.98 | 1.22 | 1.39 | 1257 | 1516 | 35.7 | 4.64 | 19.2 |
| Inventive Example 1-2 | 1.94 | 1.95 | 1.37 | 1257 | 1399 | 67.7 | 3.38 | 22.3 |
| Inventive Example 1-3 | 2.92 | 0.98 | 1.38 | 1184 | 1509 | 46.1 | 4.22 | 22.6 |
| Inventive Example 1-4 | 4.25 | 1.30 | 1.96 | 1184 | 1501 | 30.9 | 4.33 | 25.4 |
| Comparative Example 1-1 | 3.17 | 0.57 | 1.38 | 1367 | 1522 | 0.0 | 4.22 | 5.3 |
| Comparative Example 1-2 | 5.00 | 0.61 | 1.97 | 1367 | 1580 | 0.0 | 3.97 | 4.6 |
| Comparative Example 1-3 | 5.82 | 13.7 | 2.35 | 1332 | 1968 | 0.0 | 4.06 | 1.4 |
| Comparative Example 1-4 | 1.97 | 1.22 | 2.38 | 1392 | 1530 | 0.0 | 4.95 | 3.4 |
| Comparative Example 1-5 | 2.05 | 1.23 | 1.43 | 1257 | 1521 | 1.59 | 7.98 | 3.2 |

(Experiment 2)

In order to verify the effect of the second embodiment of the present invention, a test below was performed using raw materials shown in Tables 6(a) to 6(c).

[Table 6]

(a) Iron oxide-containing material

(Unit: mass percent)

| Iron oxide-containing material | T.Fe | FeO | $SiO_2$ | CaO | $Al_2O_3$ | MgO |
|---|---|---|---|---|---|---|
| A | 67.17 | 0.02 | 1.41 | 0.01 | 1.07 | 0.04 |
| B | 64.13 | 0.23 | 3.82 | 0.07 | 1.85 | 0.14 |
| C | 45.87 | 2.82 | 6.14 | 15.91 | 2.26 | 1.43 |

(b) Carbon material

(Unit: mass percent)

| Carbon material | Industrial analysis | | | Elemental analysis | Chemical analysis of ash | | | | |
|---|---|---|---|---|---|---|---|---|---|
| | Volatile matter | Ash | Fixed carbon | T.C | T.Fe | $SiO_2$ | CaO | $Al_2O_3$ | MgO |
| D | 17.95 | 9.43 | 72.62 | 83.46 | 4.70 | 45.93 | 6.06 | 29.24 | 2.24 |

(continued)

| (c) Pre-melt slag and auxiliary materials | | | | | | | |
|---|---|---|---|---|---|---|---|
| Type | | Pre-melt slag or auxiliary material | Component (mass percent) | | | | Solidus temperature $T_{S \cdot P}$ of the $CaO$-$SiO_2$-$Al_2O_3$ ternary slag (°C) |
| | | | $SiO_2$ | CaO | $Al_2O_3$ | MgO | |
| E | Synthetic slag | Pre-melt slag | 49.2 | 25.9 | 24.9 | - | 1184 |
| F | Blast furnace slag | Pre-melt slag | 33.8 | 41.7 | 13.4 | 7.4 | 1273 |
| G | Steelmaking slag | Pre-melt slag | 59.1 | 27.3 | 13.6 | - | 1184 |
| H | Limestone | Auxiliary materials | 0.01 | 56.23 | 0.12 | 0.23 | 1448 |
| I | Silica stone | Auxiliary materials | 96.83 | 1.68 | 0.02 | 0.08 | 1184 |
| J | Alumina | Auxiliary materials | - | - | >99.9 | - | 2054 (melting point) |

(Test Method)

In this example, a carbon-material-containing iron oxide briquette composition was used in the form of pellets.

To an iron oxide-containing material (a), a carbon material (b), and a pre-melt slag or auxiliary materials (c) blended at various blending ratios as shown in Table 7, 1.5% by mass (constant) of flour serving as a binder and an appropriate amount of water were added. These materials were formed into raw pellets with a diameter of 17 mm using a tire granulator. The raw pellets were dried at 105°C for 20 hours in a drier, whereby adsorbed water was completely removed therefrom. The dried pellets (carbon-material-containing iron oxide pellets) had an apparent density of 1,800 kg/m$^3$ to 2,000 kg/m$^3$.

The dried pellets (carbon-material-containing iron oxide pellets) were heat-treated in a compact high-frequency rapid heating furnace (manufactured by Sekisui Medical Electronics, the type of an oscillator being MU-1700, the type of a furnace being UD-250) outlined in Fig. 3. For a heating sleeve, a graphite tube coated with alumina was used to prevent graphite from being depleted by a $CO_2$-containing gas generated by heating the pellets.

A heating pattern was as follows: as shown in Fig. 4(b), heating was performed at a rate of 150°C/min from room temperature to 1,250°C and a rate of 15°C/min from 1,250°C to 1,320°C and was stopped immediately after reaching 1,320°C and quenching was performed. A heating atmosphere was supplied with an N$_2$ gas at a rate of 3 NL/min and a cooling atmosphere was supplied with a He gas at a rate of 3 NL/min.

[Table 7]

| | | | (c) | | | |
|---|---|---|---|---|---|---|
| | (a) Iron oxide-containing material | (b) Carbon material | Pre-melt slag | Auxiliary materials | | |
| | | | | H | I | J |
| Inventive Example 2-1 | A:71.0 | D:19.5 | E:8.0 | - | - | - |
| Inventive Example 2-2 | A:70.0 | D:18.5 | E:10.0 | - | - | - |
| Inventive Example 2-3 | B:68.0 | D:17.5 | E:13.0 | - | - | - |
| Inventive Example 2-4 | A:70.0 | D:18.5 | F:10.0 | - | - | - |

(Unit: mass percent)

(continued)

| | (a) Iron oxide-containing material | (b) Carbon material | (c) | | | |
| | | | Pre-melt slag | Auxiliary materials | | |
| | | | | H | I | J |
|---|---|---|---|---|---|---|
| Inventive Example 2-5 | A:70.0 | D:18.5 | G:10.0 | - | - | - |
| Inventive Example 2-6 | A:73.5 | D:15.0 | E:10.0 | - | - | - |
| Inventive Example 2-7 | A:72.5 | D:18.5 | G:7.5 | - | - | - |
| Comparative Example 2-1 | A:70.0 | D:18.5 | - | 3.0 | 5.5 | 1.5 |
| Comparative Example 2-2 | A:70.0 | D:18.5 | - | 5.0 | 3.5 | 1.5 |
| Comparative Example 2-3 | A:70.0 | D:18.5 | | 7.0 | 2.0 | 1.0 |
| Comparative Example 2-4 | A:60.0 | D:18.5 | F:20.0 | - | - | - |

Note: The remainder is 1.5% by mass of flour.

Direct reduced iron obtained by heat treatment in accordance with the above heating pattern was measured for carbon content and crushing strength. The results are shown in Table 8. In this table, the following properties are summarized: the content of $SiO_2$, CaO, and $Al_2O_3$ in each unreduced pellet (carbon-material-containing iron oxide pellet); the solidus temperature Ts, liquidus temperature $T_L$, and liquid phase ratio of the total briquette composition ternary slag; and the melt ratio of an $Al_2O_3$-CaO-$SiO_2$ ternary slag in direct reduced iron.

The liquid phase ratio is located between a solidus temperature and liquidus temperature in an equilibrium diagram and is defined as the mass percentage of a liquid in a solid-liquid mixture (that is, a solid phase-liquid phase mixture) (see paragraph [0036] of Japanese Unexamined Patent Application Publication No. 2005-48197). In this example, the mass percentage (%) of a liquid in a solid-liquid mixture at the heat treatment temperature (1,300°C) was calculated using the thermodynamic equilibrium calculation software "FactSage". The melt ratio (%) of the $Al_2O_3$-CaO-$SiO_2$ ternary slag in direct reduced iron was determined by multiplying the total mass % of the $Al_2O_3$-CaO-$SiO_2$ ternary slag in direct reduced iron by the liquid phase ratio (%) divided by 100.

The unit kgf of the crushing strength of direct reduced iron in this table corresponds to 9.80665 N.

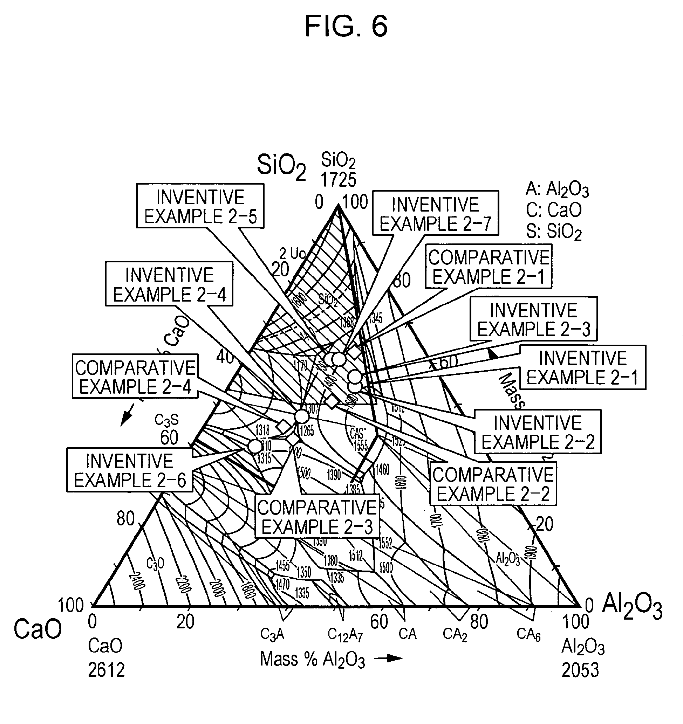

Fig. 6 shows a diagram obtained by plotting the composition of the $Al_2O_3$-CaO-$SiO_2$ ternary slag in each of the carbon-material-containing iron oxide pellets of Inventive Examples 2-1 to 2-7 and Comparative Examples 2-1 to 2-5 on the ternary phase diagram of Fig. 2.

In all of the inventive and comparative examples, the carbon use efficiency ranged from 0.08 to 0.12.

The carbon-material-containing iron oxide pellets of Inventive Examples 2-1 to 2-7 all contain the pre-melt slag, in which the solidus temperature (pre-melt slag solidus temperature) $T_{S\cdot P}$ of the $Al_2O_3$-CaO-$SiO_2$ ternary slag that is determined from the content of $Al_2O_3$, CaO, and $SiO_2$ is 1,300°C or lower.

For the pellets of these examples, the solidus temperature (total-slag solidus temperature) $T_{S\cdot S}$ of an $Al_2O_3$-CaO-$SiO_2$ ternary slag that is determined from the content of $Al_2O_3$, CaO, and $SiO_2$ in the pellets is 1,300°C or lower and the melt ratio of the $Al_2O_3$-CaO-$SiO_2$ ternary slag in direct reduced iron obtained by heat-treating the pellets in a rotary hearth reduction furnace at 1,320°C, which is higher than the total-slag solidus temperature Ts and lower than the liquidus temperature (total-slag liquidus temperature) $T_{L\cdot S}$ of the $Al_2O_3$-CaO-$SiO_2$ ternary slag that is determined from the content of $Al_2O_3$, CaO, and $SiO_2$ in the pellets, ranges from 1% to 20%.

Furthermore, for the pellets of these examples, the amount of residual carbon in direct reduced iron obtained by heat treatment at the same temperature is 6% by mass or less (3% by mass or more). Thus, the pellets of these examples meet requirements for the second embodiment of the present invention. The crushing strength of the direct reduced iron is high, more than 25 kgf/piece. In particular, in Inventive Example 2-7, a steelmaking slag which serves as a pre-melt slag and which a solidus temperature $T_{S\cdot P}$ of 1,200°C or lower, which is more preferred, is blended; the content of residual carbon is 3% or more; and the total-slag solidus temperature $T_{S \cdot S}$ is 1,200°C or lower, which is more preferred. This results in that the crushing strength of direct reduced iron is highest, more than 40 kgf/piece.

In contrast, none of the carbon-material-containing iron oxide pellets of Comparative Examples 2-1 to 2-3 meets the requirements for the second embodiment of the present invention because although the total-slag solidus temperature $T_{S \cdot S}$ is 1,300°C or lower and the melt ratio ranges from 1% to 20%, no pre-melt slag is blended. Therefore, the crushing strength of obtained direct reduced iron is low, less than 15 kgf/piece.

The carbon-material-containing iron oxide pellets of Comparative Example 2-4 do not meet the requirements for the second embodiment of the present invention because although a pre-melt slag having a pre-melt slag solidus temperature $T_{S \cdot P}$ of 1,300°C or lower is blended and the total-slag solidus temperature $T_{S \cdot S}$ is 1,300°C or lower, the melt ratio exceeds 20%. Therefore, the crushing strength of obtained direct reduced iron is very low, less than 4 kgf/piece.

[Table 8]

| | Ternary slag in pellet (carbon-material-containing iron oxide briquette composition) | | | | | | Reduced iron | | | |
|---|---|---|---|---|---|---|---|---|---|---|
| | $SiO_2$ (mass percent) | CaO (mass percent) | $Al_2O_3$ (mass percent) | Solidus temperature Ts (°C) | Liquidus temperature $T_L$ (°C) | Liquid phase ratio (%) | Amount of ternary slag (mass percent) | Melt ratio of ternary slag (%) | Residual C (mass percent) | Crushing strength (kgf/piece) |
| Inventive Example 2-1 | 5.78 | 2.19 | 3.29 | 1184 | 1535 | 36.0 | 17.2 | 6.2 | 4.44 | 25.2 |
| Inventive Example 2-2 | 6.71 | 2.70 | 3.75 | 1184 | 1534 | 39.3 | 19.9 | 7.8 | 3.44 | 29.3 |
| Inventive Example 2-3 | 9.75 | 3.51 | 4.98 | 1184 | 1522 | 44.9 | 26.6 | 12.0 | 3.21 | 32.6 |
| Inventive Example 2-4 | 5.17 | 4.28 | 2.60 | 1257 | 1362 | 85.0 | 18.3 | 15.5 | 3.19 | 35.4 |
| Inventive Example 2-5 | 7.70 | 2.84 | 2.62 | 1184 | 1426 | 80.7 | 19.9 | 16.1 | 3.26 | 31.8 |
| Inventive Example 2-6 | 10.1 | 14.4 | 4.56 | 1273 | 1572 | 23.1 | 37.8 | 8.7 | 3.39 | 30.1 |
| Inventive Example 2-7 | 6.26 | 2.16 | 2.31 | 1184 | 1464 | 73.0 | 16.5 | 12.1 | 3.02 | 42.1 |
| Comparative Example 2-1 | 7.11 | 1.89 | 2.76 | 1184 | 1465 | 33.3 | 17.8 | 5.9 | 3.44 | 7.3 |
| Comparative Example 2-2 | 5.18 | 2.98 | 2.77 | 1184 | 1490 | 54.8 | 16.6 | 9.1 | 3.52 | 10.6 |
| Comparative Example 2-3 | 3.73 | 4.08 | 2.27 | 1257 | 1412 | 80.9 | 15.3 | 12.3 | 3.48 | 14.4 |
| Comparative Example 2-4 | 9.25 | 9.49 | 4.17 | 1257 | 1302 | 99.7 | 32.3 | 32.3 | 3.27 | 3.5 |

While this application has been described in detail with reference to specific embodiments, it is apparent to those skilled in the art that variations and modifications can be made without departing from the spirit and scope of the present invention.

This application is based on a Japanese patent application (Japanese Patent Application No. 2010-070175) filed on March 25, 2010, a Japanese patent application (Japanese Patent Application No. 2010-070176) filed on March 25, 2010, and a Japanese patent application (Japanese Patent Application No. 2010-236743) filed on October 21, 2010, the entire contents of which are incorporated herein by reference.

Industrial Applicability

According to the present invention, direct reduced iron which contains a sufficient amount of carbon and which has increased crushing strength can be produced using a carbon-material-containing iron oxide briquette composition in which the solidus temperature of an $Al_2O_3$-CaO-$SiO_2$ ternary slag in the carbon-material-containing iron oxide briquette composition is adjusted to 1,300°C or lower and in which raw materials are blended such that residual carbon in direct reduced iron that is produced by heating the carbon-material-containing iron oxide briquette composition at a temperature which is higher than the solidus temperature thereof and which is lower than the liquidus temperature thereof accounts for 6% by mass or less.

Furthermore, according to the present invention, a pre-melt slag in which the solidus temperature of an $Al_2O_3$-CaO-$SiO_2$ ternary slag is 1,300°C or lower, preferably 1,200°C or lower, is blended in a carbon-material-containing iron oxide briquette composition. Therefore, when the carbon-material-containing iron oxide briquette composition is heat-treated in a moving hearth reduction furnace, a portion of the pre-melt slag is readily melted and the sintering reaction of metallic iron is promoted, whereby direct reduced iron with increased crushing strength can be produced.

**Claims**

1.  A carbon-material-containing iron oxide briquette composition used as a feedstock for moving hearth reduction furnaces for producing direct reduced iron, wherein the amount of a blended carbon material is such that the solidus temperature of an $Al_2O_{33}$-CaO-$SiO_2$ ternary slag that is determined from the content of $Al_2O_3$, CaO, and $SiO_2$ in the briquette composition is 1,300°C or lower and residual carbon in direct reduced iron produced by heat-treating the briquette composition in the moving hearth reduction furnace at a temperature which is higher than the solidus temperature thereof and which is lower than the liquidus temperature of the ternary slag accounts for 6% by mass or less.

2.  A method for producing a carbon-material-containing iron oxide briquette composition used as a feedstock for a moving hearth reduction furnace for producing direct reduced iron, the method comprising a step of adjusting the blending ratio of an iron oxide-containing material, a carbon material, and an auxiliary material such that the solidus temperature of an $Al_2O_3$-CaO-$SiO_2$ ternary slag that is determined from the content of $Al_2O_3$, CaO, and $SiO_2$ in the briquette composition is 1,300°C or lower and residual carbon in direct reduced iron by produced by heat-treating the briquette composition in the moving hearth reduction furnace at a temperature which is higher than the solidus temperature thereof and which is lower than the liquidus temperature of the ternary slag accounts for 6% or less.

3.  The method for producing the carbon-material-containing iron oxide briquette composition according to Claim 2, wherein the auxiliary material used is at least one of a calcium oxide-containing substance and a silicon dioxide-containing substance.

4.  A method for producing direct reduced iron by heat-treating the carbon-material-containing iron oxide briquette composition according to Claim 1 or a carbon-material-containing iron oxide briquette composition produced by the method according to Claim 2 or 3 in the moving hearth reduction furnace, the method comprising a step of adjusting the heat treatment temperature within a temperature range which is higher than the solidus temperature and which is lower than the liquidus temperature such that the carbon use efficiency $\eta_c$ defined by the following equation ranges from 0.08 to 0.12:

$$\text{Equation} \quad \eta_c = NCO_2 / (NCO + NCO_2)$$

wherein NCO and $NCO_2$ are the total molar quantity of CO and the total molar quantity of $CO_2$, respectively,

generated from the carbon-material-containing iron oxide briquette composition during the heat treatment.

5. A carbon-material-containing iron oxide briquette composition used as a feedstock for moving hearth reduction furnaces for producing direct reduced iron, containing a pre-melt slag in which the pre-melt slag solidus temperature $T_{S \cdot P}$ of an $Al_2O_3$-$CaO$-$SiO_2$ ternary slag that is determined from the content of $Al_2O_3$, $CaO$, and $SiO_2$ is 1,300°C or lower.

6. The carbon-material-containing iron oxide briquette composition according to Claim 5, wherein the pre-melt slag solidus temperature $T_{S \cdot P}$ is 1,200°C or lower.

7. The carbon-material-containing iron oxide briquette composition according to Claim 5, wherein the pre-melt slag is at least one of a blast furnace slag and a steelmaking slag.

8. The carbon-material-containing iron oxide briquette composition according to Claim 6, wherein the pre-melt slag is at least one of a blast furnace slag and a steelmaking slag.

9. A method for producing the carbon-material-containing iron oxide briquette composition according to Claim 5 or 7, comprising a step of adjusting the blending ratio of the pre-melt slag such that the total-slag solidus temperature $T_{S \cdot S}$ of the $Al_2O_3$-$CaO$-$SiO_2$ ternary slag that is determined from the content of $Al_2O_3$, $CaO$, and $SiO_2$ in the briquette composition is 1,300°C or lower and the melt ratio of the $Al_2O_3$-$CaO$-$SiO_2$ ternary slag in direct reduced iron that is produced in such a manner that the briquette composition is heat-treated in the moving hearth reduction furnace at a heat treatment temperature which is higher than the total-slag solidus temperature $T_{S \cdot S}$ an which is lower than the total-slag liquidus temperature $T_{L \cdot S}$ of the $Al_2O_3$-$CaO$-$SiO_2$ ternary slag that is determined from the content of $Al_2O_3$, $CaO$, and $SiO_2$ in the briquette composition accounts for 1% to 20%, wherein the melt ratio of the $Al_2O_3$-$CaO$-$SiO_2$ ternary slag in the direct reduced iron is defined as the mass ratio of a portion of the $Al_2O_3$-$CaO$-$SiO_2$ ternary slag in the direct reduced iron to the direct reduced iron, the portion being converted into a liquid phase at the heat treatment temperature.

10. A method for producing the carbon-material-containing iron oxide briquette composition according to Claim 6 or 8, comprising a step of adjusting the blending ratio of the pre-melt slag such that the total-slag solidus temperature $T_{S \cdot S}$ of the $Al_2O_3$-$CaO$-$SiO_2$ ternary slag that is determined from the content of $Al_2O_3$, $CaO$, and $SiO_2$ in the briquette composition is 1,200°C or lower and the melt ratio of the $Al_2O_3$-$CaO$-$SiO_2$ ternary slag in direct reduced iron that is produced in such a manner that the briquette composition is heat-treated in the moving hearth reduction furnace at a heat treatment temperature which is higher than the total-slag solidus temperature $T_{S \cdot S}$ and which is lower than the total-slag liquidus temperature $T_{L \cdot S}$ of the $Al_2O_3$-$CaO$-$SiO_2$ ternary slag that is determined from the content of $Al_2O_3$, $CaO$, and $SiO_2$ in the briquette composition accounts for 1% to 20%, wherein the melt ratio of the $Al_2O_3$-$CaO$-$SiO_2$ ternary slag in the direct reduced iron is defined as the mass ratio of a portion of the $Al_2O_3$-$CaO$-$SiO_2$ ternary slag in the direct reduced iron to the direct reduced iron, the portion being converted into a liquid phase at the heat treatment temperature.

11. A method for producing direct reduced iron by heat-treating the carbon-material-containing iron oxide briquette composition according to any one of Claims 5 to 8 in the moving hearth reduction furnace, the amount of a carbon material blended in the carbon-material-containing iron oxide briquette composition being adjusted, the method comprising a step of adjusting the heat treatment temperature within a temperature range which is higher than the total-slag solidus temperature $T_{S \cdot S}$ and which is lower than the total-slag liquidus temperature $T_{L \cdot S}$ such that the carbon use efficiency $\eta_c$ defined by the following equation ranges from 0.08 to 0.12 to obtain direct reduced iron with a carbon content of 6% by mass or less:

$$\text{Equation} \qquad \eta_c = NCO_2 / (NCO + NCO_2)$$

wherein $NCO$ and $NCO_2$ are the total molar quantity of $CO$ and the total molar quantity of $CO_2$, respectively, generated from the carbon-material-containing iron oxide briquette composition during the heat treatment.

12. A method for producing direct reduced iron by heat-treating the carbon-material-containing iron oxide briquette composition according to Claim 9 in the moving hearth reduction furnace, the amount of a carbon material blended in the carbon-material-containing iron oxide briquette composition being adjusted, the method comprising a step of adjusting the heat treatment temperature within a temperature range which is higher than the total-slag solidus temperature $T_{S \cdot S}$ and which is lower than the total-slag liquidus temperature $T_{L \cdot S}$ such that the carbon use efficiency $\eta_c$ defined by the following equation ranges from 0.08 to 0.12 to obtain direct reduced iron with a carbon content of 6% by mass or less:

$$\text{Equation} \qquad \eta_c = NCO_2 \,/\, (NCO + NCO_2)$$

wherein NCO and $NCO_2$ are the total molar quantity of CO and the total molar quantity of $CO_2$, respectively, generated from the carbon-material-containing iron oxide briquette composition during the heat treatment.

13. A method for producing direct reduced iron by heat-treating the carbon-material-containing iron oxide briquette composition according to Claim 10 in the moving hearth reduction furnace, the amount of a carbon material blended in the carbon-material-containing iron oxide briquette composition being adjusted, the method comprising a step of adjusting the heat treatment temperature within a temperature range which is higher than the total-slag solidus temperature $T_{S \cdot S}$ and which is lower than the total-slag liquidus temperature $T_{L \cdot S}$ such that the carbon use efficiency $\eta_c$ defined by the following equation ranges from 0.08 to 0.12 to obtain direct reduced iron with a carbon content of 6% by mass or less:

$$\text{Equation} \qquad \eta_c = NCO_2 \,/\, (NCO + NCO_2)$$

wherein NCO and $NCO_2$ are the total molar quantity of CO and the total molar quantity of $CO_2$, respectively, generated from the carbon-material-containing iron oxide briquette composition during the heat treatment.

# FIG. 1

# FIG. 2

# FIG. 3

REFRACTORY SHEET

ALUMINA TUBE

QUARTZ TUBE

GRAPHITE TUBE

INDUCTION WATER-COOLED COIL

REFRACTORY SUPPORT

TEMPERATURE MEASUREMENT THERMOCOUPLE

# FIG. 4

(a)

(b)

# FIG. 5

# FIG. 6

## INTERNATIONAL SEARCH REPORT

International application No.

PCT/JP2011/057254

| A. CLASSIFICATION OF SUBJECT MATTER |
|---|
| *C22B1/243*(2006.01)i, *C21B13/10*(2006.01)i |

According to International Patent Classification (IPC) or to both national classification and IPC

| B. FIELDS SEARCHED |
|---|
| Minimum documentation searched (classification system followed by classification symbols)<br>C22B1/00-61/00, C21B13/00-13/14 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-13125 A (Midrex International B.V.,<br>Zurich Branch),<br>15 January 2003 (15.01.2003),<br>claims 1 to 7; paragraphs [0027] to [0039],<br>[0054] to [0056], [0059]; fig. 1, 11<br>(Family: none) | 1-3,5-8<br>4,9-13 |
| Y | JP 2007-191736 A (Kobe Steel, Ltd.),<br>02 August 2007 (02.08.2007),<br>claims 1 to 5; paragraphs [0001], [0019] to<br>[0021], [0024] to [0029], [0035], [0042] to<br>[0050], [0052], [0053], [0056], [0058]; fig. 2<br>& US 2009/0282950 A1     & WO 2007/083450 A1 | 4,9-13 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>17 June, 2011 (17.06.11) | Date of mailing of the international search report<br>28 June, 2011 (28.06.11) |
|---|---|
| Name and mailing address of the ISA/<br>   Japanese Patent Office | Authorized officer |
| Facsimile No. | Telephone No. |

Form PCT/ISA/210 (second sheet) (July 2009)

<div align="center">

**INTERNATIONAL SEARCH REPORT**

</div>

| | International application No. |
|---|---|
| | PCT/JP2011/057254 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 56-022932 B2  (Nippon Steel Corp.),<br>28 May 1981 (28.05.1981),<br>claims; fig. 1 to 7<br>& JP 51-56722 A | 1-13 |
| A | WO 2009/123115 A1  (Nippon Steel Corp.),<br>08 October 2009 (08.10.2009),<br>claims<br>& AU 2009232786 A        & KR 10-2010-0116692 A | 1-13 |
| A | WO 2009/014255 A1  (Denki Kagaku Kogyo Kabushiki<br>Kaisha),<br>29 January 2009 (29.01.2009),<br>claims; tables 1 to 17<br>& CN 101755064 A        & KR 10-2010-0043044 A | 1-13 |

Form PCT/ISA/210 (continuation of second sheet) (July 2009)

## INTERNATIONAL SEARCH REPORT

International application No.

PCT/JP2011/057254

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

```
  The invention in claim 1 is an invention relating to a carbon composite
iron oxide agglomerate which has such a carbon content as giving a residual
carbon amount of 6 mass% or less.
  The inventions in claims 2-4 are inventions relating to a method of producing
a carbon composite iron oxide agglomerate which has such a carbon content
as giving a residual carbon amount of 6 mass% or less.
  The inventions in claims 5-8 are inventions relating to a carbon composite
iron oxide agglomerate wherein the residual carbon amount is not specified.
  The inventions in claims 9, 10, 12 and 13 are inventions relating to a method
of producing a carbon composite iron oxide (continued to extra sheet)
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2011/057254 |

Continuation of Box No.III of continuation of first sheet(2)

agglomerate wherein the ratio of liquid phase in a slag is specified when the heating temperature is determined.

The invention in claim 11 is an invention relating to a method of producing a carbon composite iron oxide agglomerate wherein, although the residual carbon amount is not specified, the carbon utilization rate is specified.

Form PCT/ISA/210 (extra sheet) (July 2009)

**REFERENCES CITED IN THE DESCRIPTION**

**Patent documents cited in the description**

- JP 2004169140 A
- JP 10147806 A
- JP 11012626 A
- JP 2006283136 A
- JP 2007197783 A
- JP 2008056986 A
- JP 2009035820 A
- JP 2009084688 A
- JP 2005048197 A
- JP 2010070175 A
- JP 2010070176 A
- JP 2010236743 A

**Non-patent literature cited in the description**

- SLAG ATLAS. Verlag Stahleisen Gmbh, 1995, 105